# EUROPEAN PATENT SPECIFICATION

(11) **EP 2 797 050 B1**
(45) Date of publication and mention of the grant of the patent: **10.07.2019**
(21) Application number: 13165553.2
(22) Date of filing: 26.04.2013
(51) Int. Cl.: G06T 5/50, G06T 7/00, B60S 1/08

(54) **A safety system and method for a motor vehicle**
Sicherheitssystem und Verfahren für ein Kraftfahrzeug
Système de sécurité et procédé pour véhicule à moteur

(43) Date of publication of application: 29.10.2014
(73) Proprietor: Veoneer Sweden AB, 447 83 Vårgårda (SE)
(72) Inventor: Larsson, Jonatan, 58248 Linköping (SE); Bålhammar, Johannes, 58724 Linköping (SE); Lundagårds, Marcus, 82291 Alfta (SE)
(74) Representative: Müller Verweyen

(56) References cited:
- WO-A1-2012/141017
- US-A1- 2003 081 815
- US-A1- 2008 129 206
- US-A1- 2011 043 624

## Description

The invention relates to a safety system for a motor vehicle according to the preamble of claim 1.

When a sensing means, in particular a camera, is positioned behind a windshield of a motor vehicle, the sensing may be disturbed or blocked by the windshield wiper passing through the field of view of the sensing means. Due to the passing wiper, one or more image frames may be unusable for the purpose of, for example, detecting objects in the environment of the motor vehicle. Therefore, the functioning and reliability of the safety means is reduced.

US 7 196 305 B2 discloses an imaging system for a vehicle with a controller programmed to detect an obstructed image frame, where the obstruction corresponds to a windshield wiper of the vehicle. In response to detecting an obstructed image frame, the controller optimizes the obstructed image for display or use by a vehicle system, in particular by removing or otherwise hiding the obstructed portion of the image, for example by a frame averaging technique or an obstruction subtraction technique.

US 2011/043624 A1 discloses a safety device for a motor vehicle, comprising a windshield camera, a driver assistance system for evaluating images of the vehicle's surroundings from said windshield camera, a human-machine interface for displaying the result of the evaluation for the driver, a windshield wiper and a rain sensor used to vary the windshield wiper frequency. Information from the windshield wiper and/or from the rains sensor is used in said driver assistance system through a software-implemented PLL.

US 2008/0129206 A1 discloses a safety system for a motor vehicle, comprising an optical sensor system for detecting headlamps of an oncoming vehicle and tail lights of a preceding vehicle, and a microcontroller which receives image signals from the image sensor, processes the images, and generates output signals. To improve performance when it is raining, the acquisition of images may be synchronized with the windshield wipers. For example, a signal can be provided from the wiper motors to indicate the position of the wipers. Images are taken immediately after the wiper passes over the sensor, while avoiding taking images while the wiper is over the image sensor.

WO 2012/141017 A1 discloses a wiper control apparatus for controlling a wiper operation, wherein a wiper speed determination unit determines the operation speed of a wiper based on a comparison between a recognition rate, which characterizes the quality of images taken by a camera, and a target recognition rate.

The problem underlying the invention is to provide a safety system and method offering improved safety, reliability and comfort for the passenger, in particular in the case where a sensing means is positioned in the field of view of a windshield wiper.

The invention solves this problem by the features of the independent claims. The coordinated operation, in particular a coordinated timing, of the sensing means and the windshield wiper enables to avoid disturbance or blockage of the sensing means by the passing wiper. According to the invention, the timing of the wiper movement and the timing of the sensing means are advantageously coordinated. In this manner, and in contrast to the prior art where obstructed image frames are recorded and amended later by image processing or related techniques, according to the invention the recording of (significantly) obstructed images is avoided from the start.

According to the invention, the wiper control means uses information about the sensing means in order to coordinate the control of the windshield wiper and the sensing means. Advantageously this is achieved by exchanging of information between the wiper control means and the sensing control means. However, also possible for example is a one-time setting of information about the sensing means in the wiper control means, or a one-time setting of information about the wiper in the sensing control means. In this case, further communication between the wiper control means and the sensing control means may be dispensed with.

Preferably, the sensing control means and/or the wiper control means is adapted to change or shift the relative timing between the sensing means and the wiper, or in other words to impose a time shift between the operation timing of the sensing means and the operation timing of the wiper.

According to the invention, the wiper is controlled in coordination with information provided by the sensing control means. The sensing control means provides information about gaps or idle phases in the image processing to the wiper control means, and the wiper controls the wiper to pass through the field of view of the sensing means during an image processing gap or idle phase.

In a further preferred embodiment, the speed of the windshield wiper may be controlled on the basis of information provided by the sensing means. In particular, the wiper speed may advantageously be enhanced if the windshield wiper is in the field of view of said sensing means. In this embodiment, it is preferable if the wiper speed is not enhanced if the windshield wiper is out of the field of view of said sensing means, in order not to irritate the driver.

The wiper control unit advantageously provides information about at least one of the current position of the wiper, the wiper speed or frequency and/or an on/off state of a wiper control lever to the sensing control means. The sensing control means may then, for example, schedule a gap in the image processing to times when the wiper passes through the field of view of said sensing means, based on the information provided by the wiper control unit.

A shared time reference, for example a common clock, is preferably established between the sensing control means and the wiper control means. In particular, the sensing control means and the wiper control means are preferably synchronized to each other on the time scale.

In one embodiment, the safety system preferably uses information from a rain sensor in said coordinated sensing and wiper control.

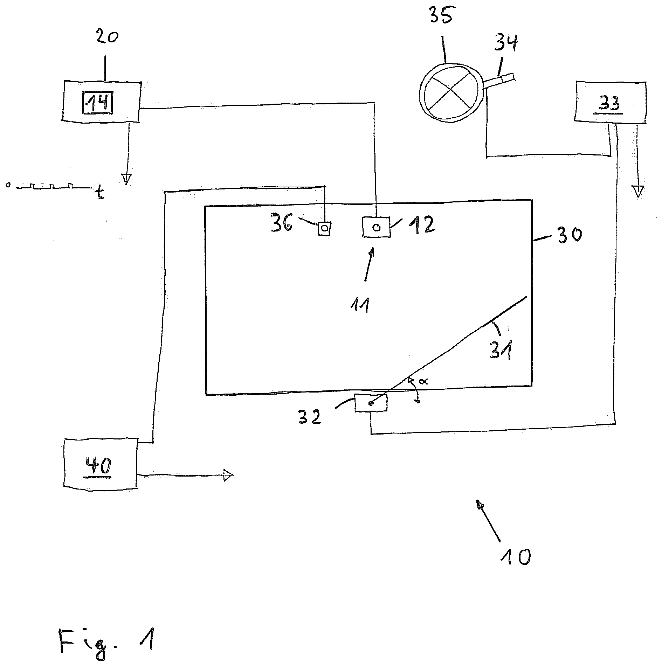

In the following the invention shall be illustrated on the basis of preferred embodiments with reference to the accompanying drawings, wherein
- Fig. 1: shows a schematic illustration of a safety system for a motor vehicle.

The safety system 10 is mounted in a motor vehicle and comprises a sensing means 11 for acquiring sensing signals of a region surrounding the motor vehicle, for example a region in front of the motor vehicle. In the following, the sensing means 11 is an imaging means adapted to acquire images of a region surrounding the motor vehicle. Preferably the imaging means 11 comprises one or more imaging devices 12, in particular long-range focusable or focused cameras preferably operating in the visible range. Operation in the infrared range is also possible. Preferably the imaging means 11 comprises one imaging device 12 in particular forming a mono imaging means 11; alternatively a plurality of imaging devices forming a stereo imaging means can be used. The camera 12 is mounted behind a windshield 30, for example the front windshield of the motor vehicle. More particularly, the camera 12 may be mounted between the inner rear-view mirror of the vehicle and the windscreen 30, facing forwardly. Other arrangements are possible, for example a rear-facing camera 12 may be mounted behind a rear window having a wiper, like in a station wagon. The camera frame rate preferably lies in the range between 40 Hz and 60 Hz but other frame rates are possible.

Other sensing means 11 are possible, for example sensing means based on radar or lidar sensors instead of cameras.

The imaging means 11 is controlled by an imaging electronic control unit (ECU) 20. The image data from the imaging means 11 is transmitted to the imaging ECU 20 where image and data processing is carried out by corresponding software in a processing means 14 contained in said imaging ECU 20. In particular, the image and data processing in the processing means 14 comprises the following functions: identification and classification of possible objects surrounding the motor vehicle, such as pedestrians, other vehicles, bicyclists or large animals; tracking over time the position of identified object candidates in the recorded images; calculation of a collision probability between the vehicle and a detected object; and/or activation or control of at least one driver assistance means depending on the result of the object detection and tracking processing and/or said collision probability calculation. The driver assistance means may in particular comprise a display means for displaying information relating to a detected object; warning means adapted to provide a collision warning to the driver by suitable optical, acoustical and/or haptical warning signals; one or more restraint systems such as occupant airbags or safety belt tensioners, pedestrian airbags, hood lifters and the like; and/or dynamic vehicle control systems such as brakes or steering means. The imaging means 11 may be used for other purposes, for example detecting of road conditions, finding absence of objects or free space detection, traffic sign recognition, lane detection, lane departure warning, lane keep assist, light source recognition, high beam automation, etc.

The electronic processing means 14 is preferably programmed or programmable and expediently comprises a microprocessor or micro-controller. The electronic processing means 14 can preferably be realized in a digital signal processor (DSP). The electronic processing means 14 may be connected to the imaging means 11 via a separate cable or the vehicle data bus 40. In another embodiment the ECU and the imaging device 12 can be integrated into a single box. Imaging and image processing are performed automatically and continuously during driving in real time.

The windshield 30 comprises at least one windshield wiper 31 driven by a wiper drive 32, in particular an electromotor. The wiper 31 is positioned such that it passes through the field of view of the camera 12 during wiping. The wiper drive 32 is controlled by a wiper electronic control unit (ECU) 33. The wiper ECU 33 preferably has information about the current position of the wiper 31. This information may for example be transmitted from the wiper drive 32 to the wiper ECU 33. The current position of the wiper 31 may for example be given as the wiper angle α, see Figure 1. The wiper 31 is actuated by the driver using a wiper lever 34 which has at least two states, namely on and off, but usually has a plurality of on states corresponding to different wiper speeds or frequencies. The wiper lever 34 is usually mounted at the steering wheel 35 of the vehicle. The wiper ECU 33 preferably provides information regarding the current position α of the wiper 31, the state of the wiper lever 34, in particular regarding the on/off state of the wiper 31 and the wiper speed, to the imaging ECU 14, preferably via the vehicle data bus 40, usually a CAN bus, Ethernet bus or Flexray bus, or alternatively directly via a corresponding signal line.

The imaging ECU 20 and the wiper ECU 33 may be integrated into one single electronic control unit (ECU).

The safety system 10 may further comprise a rain sensor 36 which is able to detect whether or not it rains, and preferably also how strong it rains. The information from the rain sensor 36 is transmitted via the vehicle data bus 40 to the wiper ECU 33 and preferably also to the imaging ECU 20.

The imaging ECU 20 provides information about the operation of the imaging means 11, in particular timing information, to the wiper ECU 33, preferably via the vehicle data bus 40, usually a CAN bus, or alternatively directly via a corresponding signal line. The timing information may for example be a digital signal containing information for every image frame of the imaging means 11 whether this frame is suited for wiper passage (since it falls into an idle phase or gap of the image processing) or not. In this manner, a time reference is established between the imaging ECU 20 and the wiper ECU 33. Preferably, the imaging ECU 20 and the wiper ECU 33 are synchronized to each other on the time scale, in particular by providing a common clock to each ECU.

According to the invention the wiper ECU 33 controls the wiper 31 to pass through the field of view of the imaging means 11 in a time period suited for wiper passage, as indicated by the information from the imaging ECU 20. This may be done, for example, by maintaining the chosen wiper speed but delaying the wiping action by a suitable time shift such that the wiper 31 will pass the imaging means 11 such that it causes as little blocking as possible. Knowledge about the wiper speed, motor start latency and/or friction of the wiper on the windshield 30 may be useful in this embodiment.

A gap or time window suited for passage of the wiper arm 31 may for example be the time period between the end of one image frame and the beginning of the next image frame. The blanking interval may be controlled by the shutter time, where the shorter the shutter time the longer may be the blanking interval. In a preferred embodiment of the camera 12, a rolling shutter may be used. When using such a camera 12, the shutter is open for a longer period of time with the effect that an image frame is not a snapshot, as in a camera with a global shutter. In the context of the invention, this may mean that a first row of pixels in the sensor array is exposed to light first at time 0; the last row of pixels is exposed at time X; a blanking interval with no exposed pixels starts at time X+1; and the first row of pixels are exposed for the next frame at time X+Y.

The time interval suited for wiper passage may be about 2 ms but may be extended to about 7 ms or even 10 ms. Even if the interval is too short for complete passing of the wiper through the field of view of the camera 12, at least the central portion of the field of view of the camera 12 may be passed without disturbance or blocking of the camera field of view.

If a global shutter is used in a preferred embodiment, the time all pixels are exposed to light is typically around 1 ms during daytime. This would give a blanking interval of more than 10 ms, for example about 20 ms, which would increase the chances of avoiding blocking of the camera field of view.

Alternatively or in addition, the wiper ECU 33 may control the wiper 31, based on the information provided by the imaging ECU 20 and the position information of the wiper arm 31, to enhance its speed during the time it is in the field of view of the imaging means 11, while the wiper speed is preferably not enhanced when the wiper 31 is not in the field of view of the imaging means 11. Speed enhancement means that the speed is enhanced over the speed the wiper 31 would normally have for the current position of the lever 34 and, if applicable, the current information from the rain sensor 36.

In an alternative embodiment, the wiper 31 is operated normally, but the imaging ECU 20 is adapted to schedule, based on the information provided by the wiper ECU 33, gaps or idle phases in image processing to times when the wiper passes through the field of view of said imaging means.

In a preferred embodiment, information about the time of presence of the wiper 31 in the camera field of view may be obtained by evaluating the image data 31 in a test phase. For one or several test sweeps of the wiper 31 the time of the beginning and end of the blocking by the wiper arm in the recorded images is measured by image processing and used in the coordinated control of the imaging means and the wiper. This information may suitably be stored in a memory of the wiper ECU 33 and/or the imaging ECU 20.

Generally, the information from the rain sensor 36 may be used by the wiper ECU 33 and/or by the imaging ECU 20 in the control of the wiper 31 and/or the imaging means 11.

## Claims

1. A safety system (10) for a motor vehicle, comprising a sensing means (11) adapted to acquire a sensing signal from a surrounding of a motor vehicle, an electronic sensing control means (20) adapted to control said sensing means (11) and to evaluate sensing signals acquired by said sensing means (11) in order to control a driver assisting means based on the result of said evaluation, and an electronic wiper control means (33) adapted to control a windshield wiper (31) of said motor vehicle, wherein said wiper control means (33) is adapted to coordinate the control of said windshield wiper (31) and said sensing means (11), and said wiper control means (33) uses information about said sensing means (11) in order to coordinate the control of said windshield wiper (31) and said sensing means (11) by controlling the wiper (31) in coordination with information provided by the sensing control means (20), **characterized in that** said sensing control means (20) provides information about gaps in sensor signal processing to said wiper control means (33) and wherein said wiper control means (33) is adapted to control said wiper (31) to pass through the field of view of said sensing means (11) during a sensor signal processing gap or idle phase.

2. The safety system as claimed in claim 1, wherein said sensing control means (20) and said wiper control means (33) exchange information in order to coordinate the control of said windshield wiper (31) and said sensing means (11) .

3. The safety system as claimed in any one of the preceding claims, wherein the sensing control means (20) and/or the wiper control means (33) is adapted to change the relative timing between the sensing means (11) and the wiper (31) .

4. The safety system as claimed in any one of the preceding claims, wherein a shared time reference is established between said sensing control means (20) and said wiper control means (33).

5. The safety system as claimed in any one of the preceding claims, wherein said sensing control means (20) and said wiper control means (33) are synchronized to each other.

6. The safety system as claimed in any one of the preceding claims, wherein said wiper control means (33) is adapted to control the speed of said windshield wiper (31) depending on information provided by the sensing control means (20).

7. The safety system as claimed in claim 6, wherein the wiper speed is enhanced when the windshield wiper (31) is in the field of view of said sensing means (11).

8. The safety system as claimed in claim 6 or 7, wherein the wiper speed is not enhanced when the windshield wiper (31) is out of the field of view of said sensing means (11) .

9. The safety system as claimed in any one of the preceding claims, wherein said wiper control unit (33) provides information about at least one of
- the current position of the wiper (31);
- the wiper speed; and/or
- an on/off state of a wiper control lever (34) to said sensing control means (20).

10. The safety system as claimed in claim 9, wherein said sensing control means (20) is adapted to schedule, based on the information provided by the wiper control unit (33), a gap or idle phase in sensor signal processing to times when the wiper (31) passes through the field of view of said sensing means (11).

11. The safety system as claimed any one of the preceding claims, wherein said safety system (10) is adapted to use information from a rain sensor (36) in said coordinated sensing and wiper control.

12. A safety method for a motor vehicle, comprising acquiring sensing signals from a surrounding of a motor vehicle using a sensing means (11), controlling said sensing means (11) by a sensing control means (20), evaluating sensing signals acquired by said sensing means (11), controlling a driver assisting means based on the result of said evaluation, controlling a windshield wiper (31) of said motor vehicle by a wiper control means (33), and coordinating said sensing control and said wiper control, and said wiper control means (33) uses information about said sensing means (11) in order to coordinate the control of said windshield wiper (31) and said sensing means (11) by controlling the wiper (31) in coordination with information provided by the sensing control means (20), **characterized in that** said sensing control means (20) provides information about gaps in sensor signal processing to said wiper control means (33), and wherein said wiper control means (33) is adapted to control said wiper (31) to pass through the field of view of said sensing means (11) during a sensor signal processing gap or idle phase.

## Patentansprüche

1. Ein Sicherheitssystem (10) für ein Kraftfahrzeug, umfassend ein Sensiermittel (11), das geeignet ist, ein Sensiersignal von einer Umgebung eines Kraftfahrzeugs zu erfassen, ein elektronisches Sensiersteuermittel (20), das geeignet ist, das Sensiermittel (11) zu steuern und die vom Sensiermittel (11) erfassten Sensiersignale auszuwerten, um auf der Basis der Auswertung ein Fahrerassistenzmittel zu steuern, und ein elektronisches Scheibenwischer-Steuermittel (33), das geeignet ist, einen Scheibenwischer (31) des Kraftfahrzeugs zu steuern, wobei das Scheibenwischer-Steuermittel (33) geeignet ist, die Steuerung des Scheibenwischers (31) und des Sensiermittels (11) zu koordinieren, und das Scheibenwischer-Steuermittel (33) Information über das Sensiermittel (11) verwendet, um die Steuerung des Scheibenwischers (31) und des Sensiermittels (11) zu koordinieren, indem sie den Scheibenwischer (31) in Koordination mit der vom Sensiersteuermittel (20) bereitgestellten Information steuert, **dadurch gekennzeichnet, dass** das Sensiersteuermittel (20) dem Scheibenwischer-Steuermittel (33) Information über Lücken in der Sensorsignalverarbeitung bereitstellt, und wobei das Scheibenwischer-Steuermittel (33) geeignet ist, den Scheibenwischer (31) so zu steuern, dass er das Sichtfeld des Sensiermittels (11) während einer Sensorsignalverarbeitungslücke oder Leerlaufphase durchquert.

2. Das Sicherheitssystem nach Anspruch 1, wobei das Sensiersteuermittel (20) und das Scheibenwischer-Steuermittel (33) Information austauschen, um die Steuerung des Scheibenwischers (31) und des Sensiermittels (11) zu koordinieren.

3. Das Sicherheitssystem nach einem der vorherigen Ansprüche, wobei das Sensiersteuermittel (20) und/oder das Scheibenwischer-Steuermittel (33) geeignet ist, die relative Zeitsteuerung zwischen dem Sensiermittel (11) und dem Scheibenwischer (31) zu ändern.

4. Das Sicherheitssystem nach einem der vorherigen Ansprüche, wobei zwischen dem Sensiersteuermittel (20) und dem Scheibenwischer-Steuermittel (33) eine gemeinsame Zeitreferenz hergestellt wird.

5. Das Sicherheitssystem nach einem der vorherigen Ansprüche, wobei das Sensiersteuermittel (20) und das Scheibenwischer-Steuermittel (33) miteinander synchronisiert sind.

6. Das Sicherheitssystem nach einem der vorherigen Ansprüche, wobei das Scheibenwischer-Steuermittel (33) geeignet ist, die Geschwindigkeit des Scheibenwischers (31) abhängig von der durch das Sensiersteuermittel (20) bereitgestellten Information zu steuern.

7. Das Sicherheitssystem nach Anspruch 6, wobei die Scheibenwischergeschwindigkeit erhöht wird, wenn der Scheibenwischer (31) sich im Sichtfeld des Sensiermittels (11) befindet.

8. Das Sicherheitssystem nach Anspruch 6 oder 7, wobei die Scheibenwischergeschwindigkeit nicht erhöht wird, wenn der Scheibenwischer (31) sich außerhalb des Sichtfelds des Sensiermittels (11) befindet.

9. Das Sicherheitssystem nach einem der vorherigen Ansprüche, wobei die Scheibenwischer-Steuereinheit (33) dem Sensiersteuermittel (20) Information über mindestens eines von
- der aktuellen Position des Scheibenwischers (31);
- der Scheibenwischergeschwindigkeit; und/oder
- einen Ein/Aus-Zustand eines Scheibenwischer-Steuerhebels (34) bereitstellt.

10. Das Sicherheitssystem nach Anspruch 9, wobei das Sensiersteuermittel (20) geeignet ist, eine Lücke oder Leerlaufphase in der Sensorsignalverarbeitung auf der Basis der von der Scheibenwischer-Steuereinheit (33) bereitgestellten Information auf Zeiten zu legen, in denen der Scheibenwischer (31) das Sichtfeld des Sensiermittels (11) durchquert.

11. Das Sicherheitssystem nach einem der vorherigen Ansprüche, wobei das Sicherheitssystem (10) geeignet ist, in der koordinierten Sensier- und Scheibenwischersteuerung Information von einem Regensensor (36) zu verwenden.

12. Ein Sicherheitsverfahren für ein Kraftfahrzeug, umfassend das Erfassen von Sensiersignalen von einer Umgebung eines Kraftfahrzeugs durch ein Sensiermittel (11), Steuern des Sensiermittels (11) durch ein Sensiersteuermittel (20), Auswerten der vom Sensiermittel (11) erfassten Sensiersignale, Steuern eines Fahrerassistenzmittels auf der Basis des Ergebnisses der Auswertung, Steuern eines Scheibenwischers (31) des Kraftfahrzeugs durch ein Scheibenwischer-Steuermittel (33), und Koordinieren der Sensiersteuerung mit der Scheibenwischersteuerung, wobei das Scheibenwischer-Steuermittel (33) Information über das Sensiermittel (11) verwendet, um die Steuerung des Scheibenwischers (31) und des Sensiermittels (11) zu koordinieren, indem es den Scheibenwischer (31) in Koordination mit der vom Sensiersteuermittel (20) bereitgestellten Information steuert, **dadurch gekennzeichnet, dass** das Sensiersteuermittel (20) dem Scheibenwischer-Steuermittel (33) Information über Lücken in der Sensorsignalverarbeitung bereitstellt, und wobei das Scheibenwischer-Steuermittel (33) geeignet ist, den Scheibenwischer (31) so zu steuern, dass er das Sichtfeld des Sensiermittels (11) während einer Sensorsignalverarbeitungslücke oder Leerlaufphase durchquert.

## Revendications

1. Un système de sécurité (10) pour véhicule automobile, comprenant un moyen de détection (11) conçu pour acquérir un signal de détection à partir de l'environnement d'un véhicule automobile, un moyen de commande de détection électronique (20) conçu pour commander ledit moyen de détection (11) et pour évaluer des signaux de détection acquis par ledit moyen de détection (11) afin de commander un moyen d'assistance au conducteur sur la base du résultat de ladite évaluation, et un moyen de commande d'essuie-glace électronique (33) conçu pour commander un essuie-glace (31) dudit véhicule automobile, dans lequel ledit moyen de commande d'essuie-glace (33) est conçu pour coordonner la commande dudit essuie-glace (31) et dudit moyen de détection (11), et ledit moyen de commande d'essuie-glace (33) utilise des informations concernant ledit moyen de détection (11) afin de coordonner la commande dudit essuie-glace (31) et dudit moyen de détection (11) en commandant l'essuie-glace (31) en coordination avec des informations fournies par le moyen de commande de détection (20), **caractérisé en ce que** ledit moyen de commande de détection (20) fournit des informations sur des interruptions dans le traitement de signaux de détection audit moyen de commande d'essuie-glace (33), et dans lequel ledit moyen de commande d'essuie-glace (33) est conçu pour commander ledit essuie-glace (31) afin qu'il traverse le champ de vision dudit moyen de détection (11) pendant une interruption de traitement de signaux de détection ou une phase inactive.

2. Le système de sécurité selon la revendication 1, dans lequel ledit moyen de commande de détection (20) et ledit moyen de commande d'essuie-glace (33) échangent des informations afin de coordonner la commande dudit essuie-glace (31) et dudit moyen de détection (11).

3. Le système de sécurité selon l'une quelconque des revendications précédentes, dans lequel le moyen de commande de détection (20) et/ou le moyen de commande d'essuie-glace (33) est conçu pour modifier la synchronisation relative entre le moyen de détection (11) et l'essuie-glace (31).

4. Le système de sécurité selon l'une quelconque des revendications précédentes, dans lequel une référence temporelle partagée est établie entre ledit moyen de commande de détection (20) et ledit moyen de commande d'essuie-glace (33).

5. Le système de sécurité selon l'une quelconque des revendications précédentes, dans lequel ledit moyen de commande de détection (20) et ledit moyen de commande d'essuie-glace (33) sont synchronisés l'un avec l'autre.

6. Le système de sécurité selon l'une quelconque des revendications précédentes, dans lequel ledit moyen de commande d'essuie-glace (33) est conçu pour commander la vitesse dudit essuie-glace (31) en fonction d'informations fournies par le moyen de commande de détection (20).

7. Le système de sécurité selon la revendication 6, dans lequel la vitesse d'essuie-glace est améliorée lorsque l'essuie-glace (31) est dans le champ de vision dudit moyen de détection (11).

8. Le système de sécurité selon la revendication 6 ou 7, dans lequel la vitesse d'essuie-glace n'est pas améliorée lorsque l'essuie-glace (31) est hors du champ de vision dudit moyen de détection (11).

9. Le système de sécurité selon l'une quelconque des revendications précédentes, dans lequel ladite unité de commande d'essuie-glace (33) fournit des informations sur au moins l'un parmi
- la position actuelle de l'essuie-glace (31) ;
- la vitesse de l'essuie-glace ; et/ou
- un état d'activation/désactivation d'un levier de commande d'essuie-glace (34) audit moyen de commande de détection (20).

10. Le système de sécurité selon la revendication 9, dans lequel ledit moyen de commande de détection (20) est conçu pour programmer, sur la base des informations fournies par l'unité de commande d'essuie-glace (33), une interruption ou une phase inactive dans le traitement des signaux de détection à des moments où l'essuie-glace (31) traverse le champ de vision dudit moyen de détection (11).

11. Le système de sécurité selon l'une quelconque des revendications précédentes, dans lequel ledit système de sécurité (10) est conçu pour utiliser des informations provenant d'un capteur de pluie (36) dans ladite commande coordonnée de détection et d'essuie-glace.

12. Un procédé de sécurité pour un véhicule automobile, comprenant d'acquérir des signaux de détection d'un environnement d'un véhicule automobile à l'aide d'un moyen de détection (11), de commander ledit moyen de détection (11) par un moyen de commande de détection (20), d'évaluer des signaux de détection acquis par ledit moyen de détection (11), de commander un moyen d'assistance au conducteur sur la base du résultat de ladite évaluation, de commander un essuie-glace (31) dudit véhicule automobile par un moyen de commande d'essuie-glace (33), et de coordonner ladite commande de détection et ladite commande d'essuie-glace, et le moyen de commande d'essuie-glace (33) utilise des informations concernant ledit moyen de détection (11) afin de coordonner la commande dudit essuie-glace (31) et dudit moyen de détection (11) en commandant l'essuie-glace (31) en coordination avec les informations fournies par le moyen de commande de détection (20), **caractérisé en ce que** ledit moyen de commande de détection (20) fournit des informations sur des interruptions dans le traitement des signaux de détection audit moyen de commande d'essuie-glace (33), et dans lequel ledit moyen de commande d'essuie-glace (33) est conçu pour commander ledit essuie-glace (31) pour traverser le champ de vision dudit moyen de détection (11) pendant une interruption de traitement de signaux de détection ou une phase inactive.
